# EUROPEAN PATENT APPLICATION

(11) **EP 4 484 785 A1**
(43) Date of publication of application: **01.01.2025**
(21) Application number: 23181844.4
(22) Date of filing: 27.06.2023
(51) Int. Cl.: F16C 35/063, F16C 35/073, F16D 1/08, F16D 1/092, F16D 1/093, F16C 35/067, F16C 41/04

(54) **SHAFT LOCKING SYSTEM**

(71) Applicant: ABB SCHWEIZ AG, 5400 Baden (CH)
(72) Inventor: Hytönen, Mikko, 00380 Helsinki (FI)
(74) Representative: Kolster Oy Ab

(57) **Abstract**

The present invention relates to a locking mechanism (2) for a shaft comprising: a first member (12) and a second member (26), the first and/or second member configured to receive a shaft (6) therein and provide a seal therebetween, and configured to be selectively affixed to one another via a fastening mechanism (40). One of the first member (12) and second member (26) comprises a locking portion (18,64), and the other of the first and second member is configured to engage said locking portion (18,64) and bias said locking portion (18,64) into engagement with the shaft (6) when the first and second member are affixed to one another.

## Description

The present disclosure relates to a locking system, particularly but not limited to, a locking system for a shaft of a turbine, motor or generator.

### Background of the Invention

Locking systems are often used to prevent rotation of a rotor portion of a motor or generator. This may be beneficial during transportation or rotation to prevent damage or other undesirable movement.

Prior art locking systems have been ad hoc in nature, and typically comprise a beam fixed to a mounting structure of the motor and a shaft of the motor. The beam must be assembled onto the mounting structure and shaft before transportation, and then dissembled once the motor is fixed in position. The inventor has found that due to the ad hoc nature of the locking system, both the assembly and disassembly of the locking system is time consuming and over-complicated. For example, in order to adequately secure the beam onto the shaft, hydraulic tools are required to secure/unsecure fasteners thereon. The locking system is therefore inflexible.

Additionally, in prior art systems, a bearing system to support the shaft comprises a housing to retain lubricant etc. This housing must be disassembled to access the bearing. Such arrangements may be complicated to manufacture and to access during maintenance.

The present invention aims to overcome or ameliorate one or more of the prior art locking systems, for example, to provide an improved shaft seal and/or locking system.

### Statement of Invention

Any aspect of the invention may be combined with any other aspect of the invention where practicable.

According to first aspect there is provided: a locking mechanism for a shaft comprising: a first member and a second member, the first and/or second member configured to receive a shaft therein and provide a seal therebetween, and to be selectively affixed to one another via a fastening mechanism; and; where one of the first member and second member comprises a locking portion, the other of the first and second member is configured to engage said locking portion and bias said locking portion into engagement with the shaft when the first and second member are affixed to one another.

The shaft may comprise a bearing assembling. The seal between the first member and/or second member may provide a seal for the bearing assembly (i.e. the first member and/or second member may seal the bearing assembly from the external environment).

The first member may be configured to bias a portion of the second member into engagement with the shaft. The second member may be configured to bias a portion of the first member into engagement with the shaft. The locking portions may be integral with the first member and/or second member. The locking portion may progressively move as the first member and second member move relative to one another. The first member and/or second member may comprise a wedge or ramp to bias the locking portion. The wedge or ramp may be configured such that there is no deformation in the seal between the first and/or second member in use.

The locking portion may comprise an inner wall/surface of the first member and/or second member. The inner wall/surface may extend along the axis of the shaft in use. The inner wall/surface may be annular and/or define a sleeve. An inner surface of the first member and/or second member may comprise a close fit/tolerance with the shaft in use. The locking portion may surround the shaft (i.e. extend about the circumference thereof). The locking portion may clamp the shaft in use).

The locking portion may comprise one or more tabs. The tabs may be displaced about the circumference of the shaft in use. The tabs may be spaced by a gap. The tabs may be curved/arcuate. Between 1 and 10 tabs may be provided. The tab may comprise an undercut or portion of reduced width to aid with movement thereof.

The first member and/or second member may comprise an angular or tapered surface. Relative movement of the first member and second member in a first direction may causes the locking portion to move in an orthogonal direction. A first tapered surface may be provided on an inner surface of the first member and/or second member. A second tapered surface may be provided on an outer surface of the first member and/or second member. The tabs may be tapered or angled. Both the first member and second member may comprise corresponding angular/tapered surface to provide movement of the locking portion.

The first member and/or second member may comprise a plurality of discrete sections. The sections may be curved/arcuate. The sections may be semi-circular. The sections may collectively define a circle. At least two of the discrete sections may be connected to one another via an interlocking formation. The interlocking formation may comprise a protrusion and an undercut. The undercut may be configured to receive the protrusion of an adjacent section. The interlocking formation may affix the first member and/or second member in a circumferential direction. The interlocking formation may allow disassembly of the first member and/or second member in an axial direction.

The first member and/or second member comprises a recess therein to allow connection between at least two of the sections.

The first member and/or second member may comprise a gap or discontinuity. The gap or discontinuity may be provided about a circumferential direction to allow flexion thereof. The gap may occupy less than or equal to 5% of the circumferential length of the first member and/or second member.

The first member and/or second member may comprise an annular or ring shape. The first member and/or second member may comprise an aperture to receive the shaft in use. The first member and/or second member may comprise a circular/curved inner surface and/or outer surface.

The first member and/or second member may be fixed to a housing of the rotor or motor. The locking mechanism may be provided adjacent a bearing assembly in use. The first member and/or second member may comprise a flange or rim to allow connection to motor housing in use. The first member and/or second member may comprise a taperer or flared flange or rim configured to be received within the motor housing in use.

A portion of one or first member and second member may be received within the other of the first and second member (i.e. the first and second member are arranged concentrically). The tabs may be received within the first member or second member. The tabs may engage an inner wall/surface of the first member or second member. The locking portion may frictionally engage the shaft in use.

The first member and/or second member may comprise a gasket. The gasket may provide a seal between the first member and/or second member and the shaft. The inner surface of the first member and/or second member may comprise one or more groove. The groove may receive a gasket in use. The groove may provide a seal between the first member and/or second and the shaft. The groove may be annular. The groove may comprise recess to retain a gasket in use.

The first member and/or second member may provide a housing /closure/end plate for a bearing assembly. The first member and/or second member may retain lubricant in the bearing assembly. The first member and/or second member may provide a sealing assembly for a bearing assembly.

The first member and second member may comprise respective apertures or recesses such that a fastener extends between first and second member in use. The apertures/recesses may comprise screw threads.

The locking portion may not engage the shaft when the first member and second member are affixed together in one or more position. Said position may include when the first member and second member are affixed together and whilst being maximally spaced.

The first member and/or second member may comprise aluminium.

The first member and/or second member may be configured to enclose the shaft and/or an end thereof. The first member and/or second member may provide a cap, sheath or shield.

According to second aspect there is provided: a motor or generator comprising the first aspect.

According to a further aspect, there is provided: a method of locking a rotor comprising: providing a first member and a second member, the first and/or second member configured to receive a shaft of the rotor therein and provide a seal therebetween; where one of the first member and second member comprises a locking portion; and affixing the first and second member to one another such that the other of the first and second member engages said locking portion and biases said locking portion into engagement with the shaft. According to a further aspect, there is provided: a locking mechanism for a shaft comprising: a first member and a second member, the first and/or second member configured to receive a shaft therein and to be selectively affixed to one another via a fastening mechanism; and where one of the first member and second member comprises a locking portion, the other of the first and second member is configured to engage said locking portion and bias said locking portion into engagement with the shaft when the first and second member are affixed to one another.

### Description

Embodiments of the present invention are described below, by way of example only, with reference to the accompanying drawings:
**Figure 1** shows a perspective view of a first embodiment of a locking system;
**Figure 2** shows a sectional side view of the first embodiment of the locking system;
**Figure 3** shows a perspective view of a second member of the locking system;
**Figure 4** shows a perspective view of a first member of the locking system;
**Figure 5** shows a sectional side view of the first member of the locking system;
**Figure 6** shows a sectional side view of the second member of the locking system;
**Figure 7** shows a sectional side view of the first and second member of the locking system;
**Figure 8** shows a front view of a second embodiment of the first and second member of the locking system;
**Figure 9** shows a perspective view of the second embodiment of the first and second member of the locking system;
**Figure 10** shows a perspective view of a third embodiment of a locking system;
**Figure 11** shows a sectional side view of the third embodiment of the locking system;
**Figure 12** shows a front view of the third embodiment of the first and second member of the locking system;
**Figure 13** shows a perspective view of the third embodiment of the first and second member of the locking system;
**Figure 14** shows a sectional side view of the third embodiment of the first and second member of the locking system;
**Figure 15** shows a sectional side view of the fourth embodiment of the locking system;
**Figure 16** shows a sectional side view of the fourth embodiment of the first and second member of the locking system;
**Figure 17** shows a perspective view of the fourth embodiment of the first and second member of the locking system;
**Figure 18** shows a sectional side view of the fifth embodiment of the first and second member of the locking system;
**Figure 19** shows an end view of the fifth embodiment of the first and second member of the locking system.

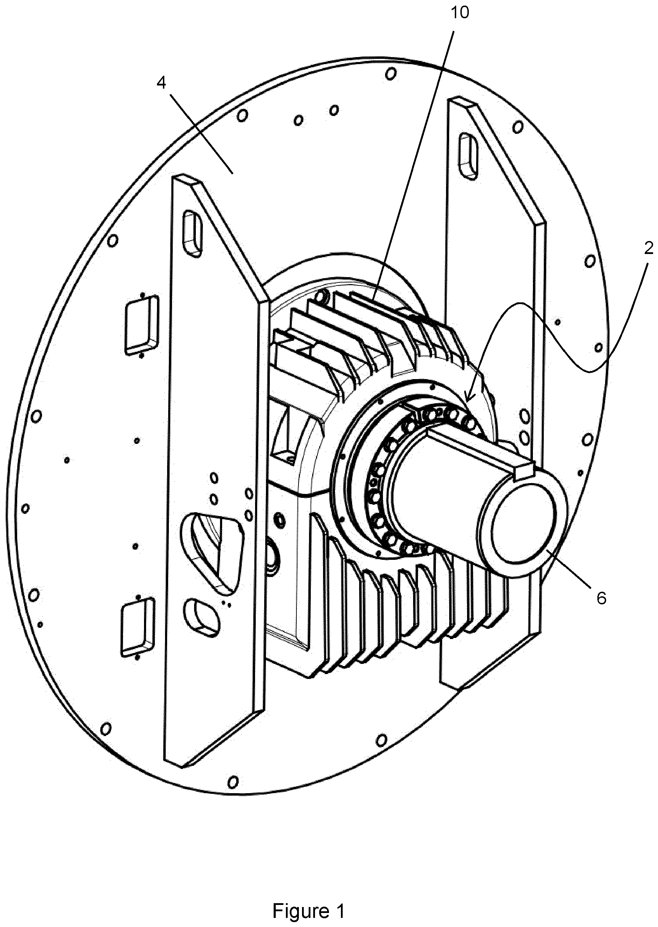

Figure 1 shows a locking system 2 mounted onto a bearing (not shown). The motor comprises a supports structure or housing 4. The housing 4 is configured to encase, support or mount the bearing in use. It can be appreciated that the housing 4 may comprise any suitable form and is not pertinent to the invention at hand. Similarly, the motor may comprise any suitable form. The motor comprises a rotatable shaft 6. The shaft is operatively connected to a rotor (not shown), to provide mechanical power in use.

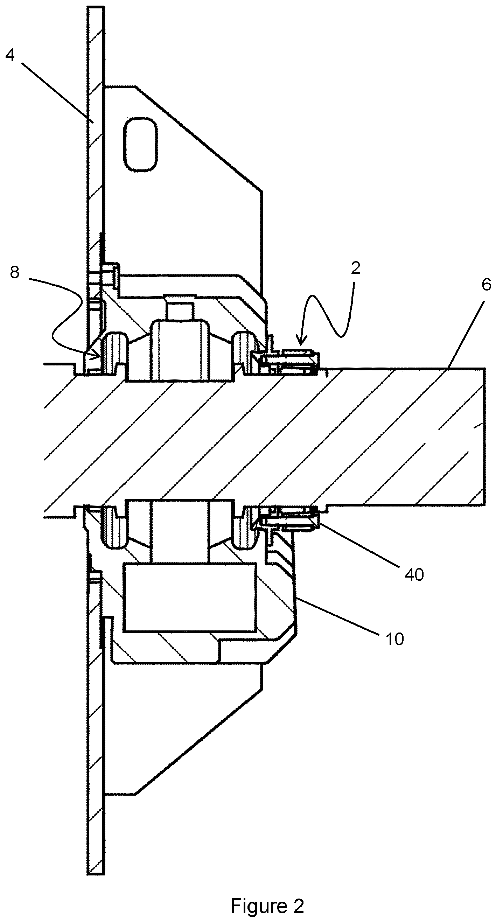

As best seen in figure 2, the locking mechanism 2 is configured to be mounted on the shaft 6. The locking mechanism 2 can therefore engage and prevent movement of the shaft 6 in use. In the present embodiment, the locking mechanism 2 is provided adjacent or proximal a bearing assembly 8. The bearing assembly 8 is configured to rotationally support the shaft 6. The locking mechanism 2 is fixed to a housing 10 of the bearing assembling 8 to prevent relative movement thereto. The locking mechanism 2 additionally provides a seal to seal against the shaft 6 in use, for example, to retain lubricants or to prevent ingress of contaminants etc. The mechanism 2 thus provides a locking seal mechanism.

The locking mechanism 2 may be provided at any position along the shaft 6 as required. For example, the locking mechanism 2 may be provided within the housing 4, or at either axial end of the shaft 6. It can be appreciated that the locking mechanism 2 can be fixed to any suitable portion of the motor and/or housing 4 accordingly. Typically, the locking mechanism 2 is provided at an easily accessible portions of the motor, such as an external portion. In the present embodiment, the locking mechanism 2 is provided at the drive end of the shaft 6 (i.e. the end that mechanical connected to the apparatus to be driven). In other embodiment, the locking mechanism is connected to a free or non-driven end of the shaft.

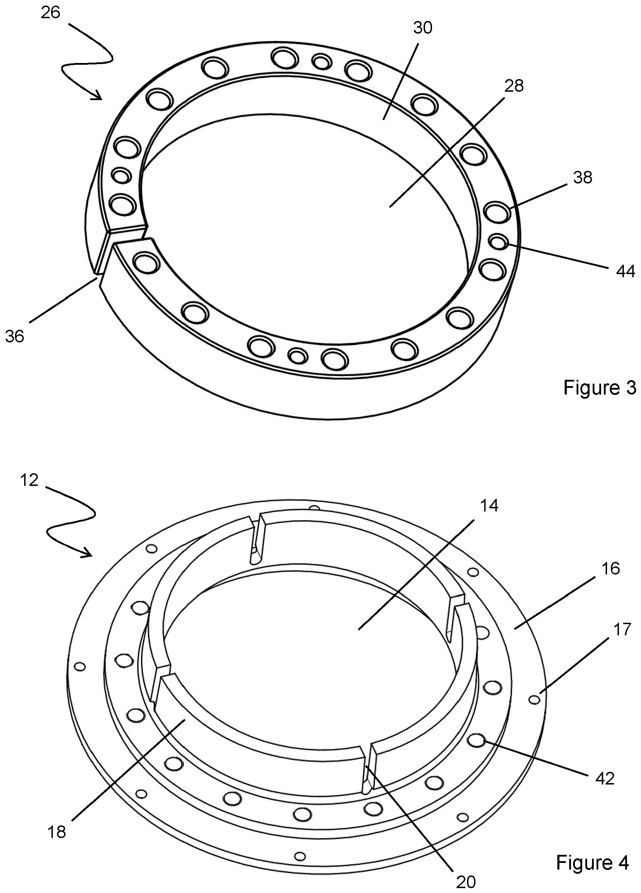

The locking mechanism 2 is shown in closer details in figures 3-7. The locking mechanism 2 comprises a first member 12. The first member 12 is configured to be fixed to the motor in use. The first member 12 is generally annular or ring shaped. The first member 12 defines an aperture 14 extending therethrough. The aperture is 14 is sized to receive the shaft 6 therein. The first member 12 comprises an outstanding flange or rim 16. The rim 16 is configured to be attached to the motor. The rim 16 comprises apertures/threads 17 to receive a fastener or the like.

The first member 12 comprises a plurality of upstanding tabs 18. The tabs 18 are configured to extend along the axial length of the shaft 6. The tabs 18 extend around the circumference of the aperture 14. The tabs 18 thus extend circumferentially about the shaft 6 in use. The tabs 18 are curved/arcuate. The tabs 18 thus conform to the outer surface of the shaft 6. The tabs 18 collectively define a collar or sleeve. A gap 20 extends between the tabs 18.

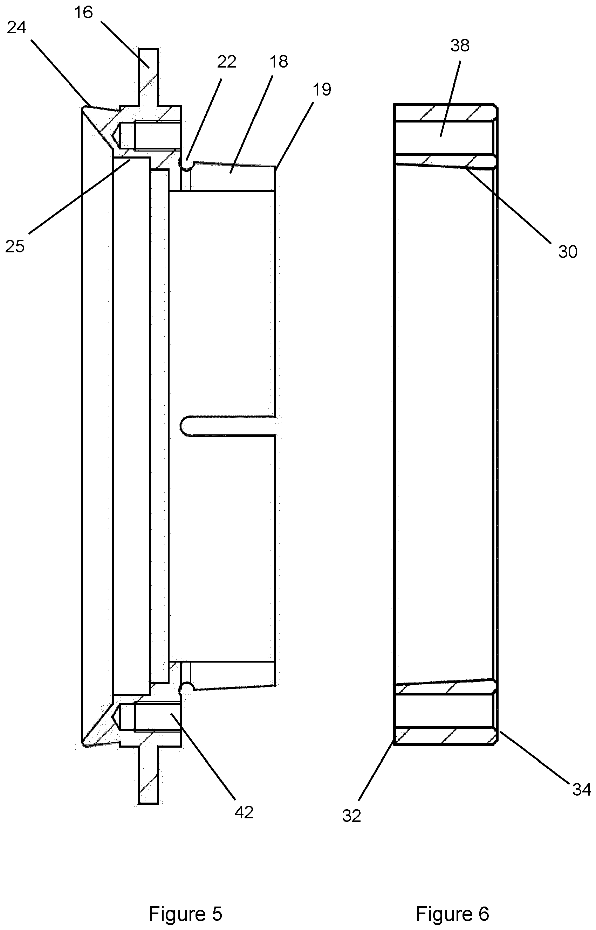

An undercut or groove 22 is provided at the base of the tab 18 (see figure 6). The undercut 22 is circular/arcuate. The base of the tab 18 comprises a reduced cross-sectional area. This helps to provide flexion of the tabs 18 relative to the first member 12. The tabs 18 taper inward toward a distal end 19 thereof.

A best seen in figures 2 and 5, the first member 12 comprises a portion 24 configured to be received within the bearing housing 10. The portion 24 is tapered/flared outward to help retain the first member 12 on the housing 10. The portion 24 is frustoconical.

An inner portion 25 is the first member 12 is configured to provide a seal against the shaft 6. This may help to retain lubricant in the housing 10 and/or prevent the ingress of contaminants into the bearing itself. The seal may be provided by a gasket (not shown), or other suitable arrangement.

The locking mechanism 2 comprises a second member 26. The second member 26 comprises an annular/ring shape. The second member 26 may comprise a collar or the like. The second member 26 member comprises an aperture 28 therein. The apertures 28 defines an inner bearing surface 30. The bearing surface 30 is angled/tapered relative to end surfaces 32,34 of the second member 26.

The second member 26 comprises a discontinuity, such as gap 36. The gap 36 generally occupies are relatively small fraction of the circumferential length of the second member 26, for example, less than 5% thereof. In use, the second member 26 is placed onto the shaft 6. The gap 36 allows some flexion thereof, allowing easier mounted to the shaft 6. In alternative embodiments, the gap 36 may not be provided and flexion may be provided by inherent properties of the second member (i.e. the material thereof is flexible), or the second member 26 may be sized such that it can easily be placed onto the shaft 6.

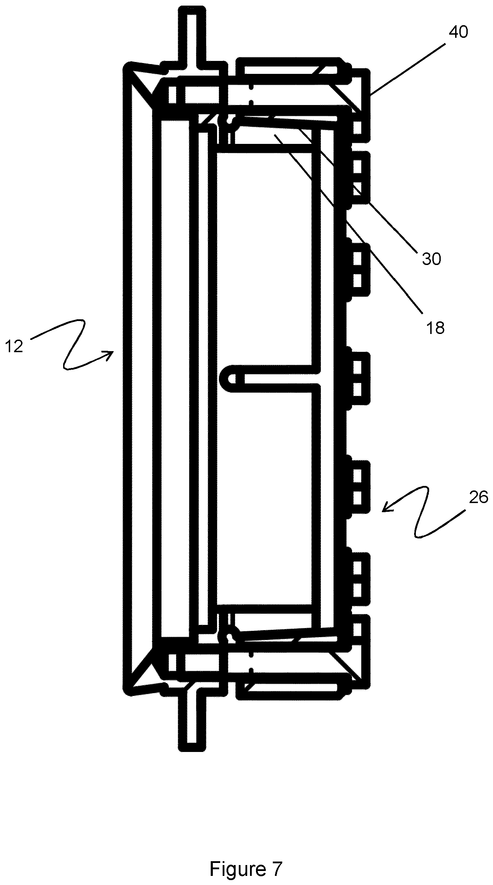

A best seen in figure 7, the second member 26 is placed onto the first member 12 in use. The angled bearing surface 30 engages the tabs 18 on the first member 12. A portion of the first member 12 is therefore received with the second member 26. Due to the angled surfaces, the tabs 18 are biased inwards as the first and second members are brought together. The tabs 18 are biased into engagement with the shaft 6 in use, preventing movement thereof (i.e. act to clamp or pinch the shaft). The surface 30 acts as a wedge/ramp.

The second member 26 comprises apertures/threads 38 to allow a fastener 40 to pass therethrough. The first member 12 comprises corresponding apertures/threads 42 to receive the fastener 40. The second member 26 can therefore be secured to the first member 12. Preferably, the fastener 40 is a threaded fastener to allow progressive unification of the first and second member. This allows control of the inward movements of the tabs 18 and the associated clamping force on the shaft 6 accordingly.

In order to bring the tabs 18 out of engagement with the shaft 6, the first and second member are moved away from one another. The tabs 18 move back to their original position under the restoring force of the material. This can be effected by unscrewing the fasteners 40. The force at which the tabs 18 engage the shaft can be adjusted accordingly. To completely separate the first and second member, the fasteners 40 can be fully released from the first member 12.

It can be appreciated that the number/spacing of the fasteners 40 and/or respective apertures 38,42 can be determined according to the requirements of the system (e.g. a larger system may require a relatively greater number of fasteners and vice versa). The fasteners 40 will typically be suitable for driving using standard pneumatic, electric or manual tools. The fasteners 40 may comprise screws, bolts, rivets, or other suitable fastener. In other embodiments, clamps or other fastening mechanism may be used to fix the second member 26 to the first member 12. In some embodiments, the tabs 18 or other portions of the first member 12 comprise threads thereon, such that the second member 26 may be threaded onto the first member 12.

Additional apertures/recess 44 are provided on the second member 26 to aid with handling/lifting thereof. The apertures 44 may allow connection of a jig etc. Additionally or alternatively, the apertures 44 may be used to drive the first member 12 and the second member 26 apart. For example, screws may be inserted into the apertures 44, which pass therethrough and engage the first member 12, thus driving the first and second members apart.

The first member 12 and/or second member 26 form unitary/singular pieces. In other embodiments, the first member 12 and/or second member 26 may be formed from two or parts. This may allow assembly of the first and/or second onto the shaft when the end of the shaft 6 is obscured (e.g. is connected to some other apparatus).

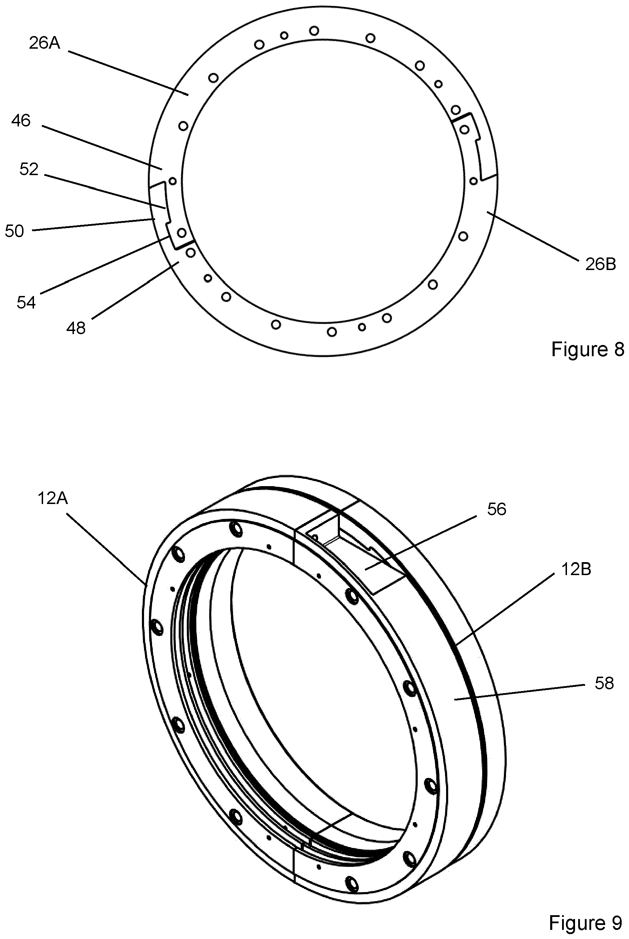

A first embodiment of a multiple section locking mechanism 2 is shown in figures 8 and 9. The second member 26 is formed two sections 26A,26B. A first end 46 of each section 26A,26B is configured to engage a second end 48 of an adjacent section 26A,26B. The ends 46,48 comprises an interlocking surface. The interlocking surface locks the sections 26A,26B in the circumferential direction, but allows relative axial movement therebetween (e.g. to allow assembly). The interlocking ends comprise a circumferential arm 50 comprising a protrusion 52. The protrusion may comprise a step or the like. The protrusion 52 comprises an undercut or recess 54 (e.g. to form a P-shape). The adjacent end comprises a similar undercut 54, with respective protrusions 52 retains within respective undercuts 54 on the adjacent section.

The first member 12 comprises a multiple sections 12A,12B. In the present embodiment, the sections 12A,12B comprise simple semi-circular shape. The sections 12A,12B are united using a fastener. The sections 12A,12B comprise a recess 56 to allow insertion of the fastener. The recess 56 is provided on the radial outer face 58 of the first member 12.

The number/size of the sections 26A,26B of the second member 26 and/or the sections 12A,12B of the first member 12 may according to requirements of the user. The first and/or second member may comprise between 1 and 10 sections. In some embodiments, the section may be partially and/or flexibly attached. For example, sections may be joined by pivots, hinges or living hinges etc.

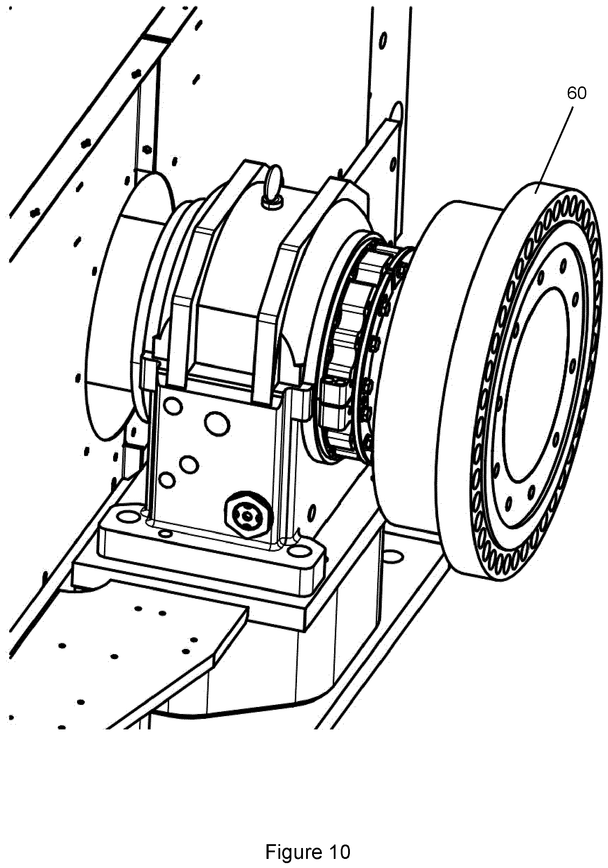

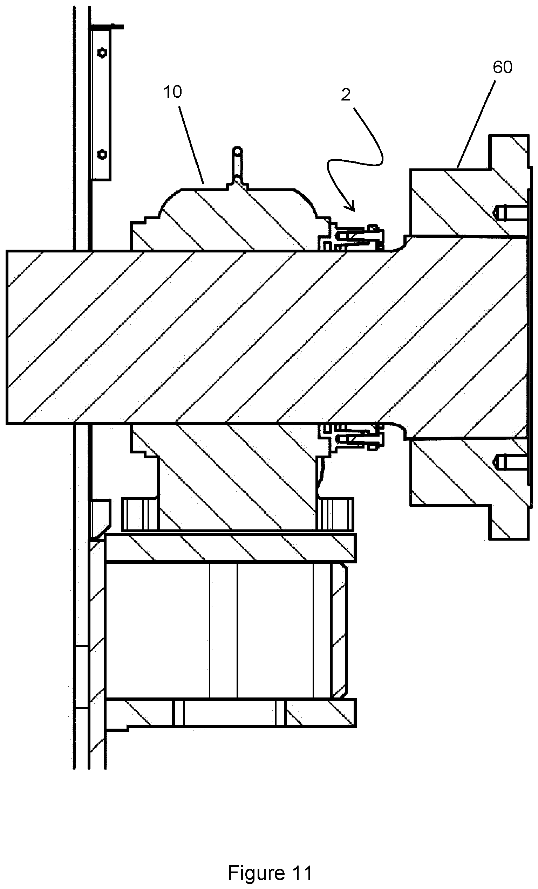

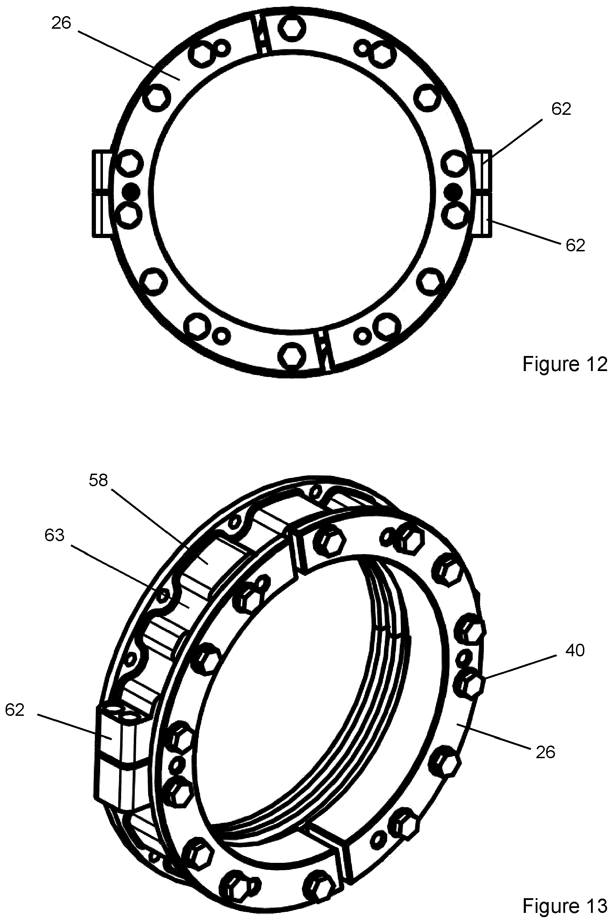

A further embodiment of the locking system 2 is shown in figures 10-14. This embodiment may be particularly beneficial where an apparatus 60 is provided on the shaft 6 which prevents the locking system 2 being over placed over the end thereof. The first member 12 comprises a plurality of sections 12A,12B. The sections 12A,12B are semi-circular. Outstanding flanges 62 are provided to allow joining of the sections 12A, 12B via a fastener. The outer face 58 comprises recesses 63 therein. The recesses allow access to the rim 16 to allow connection of the first member 12 to the motor using fasteners.

The second member 26 comprises two sections 26A,26B. The sections are semi-circular. The second member 26 is affixed to the first member via fasteners 40. The fasteners 40 are located between the recesses 62.

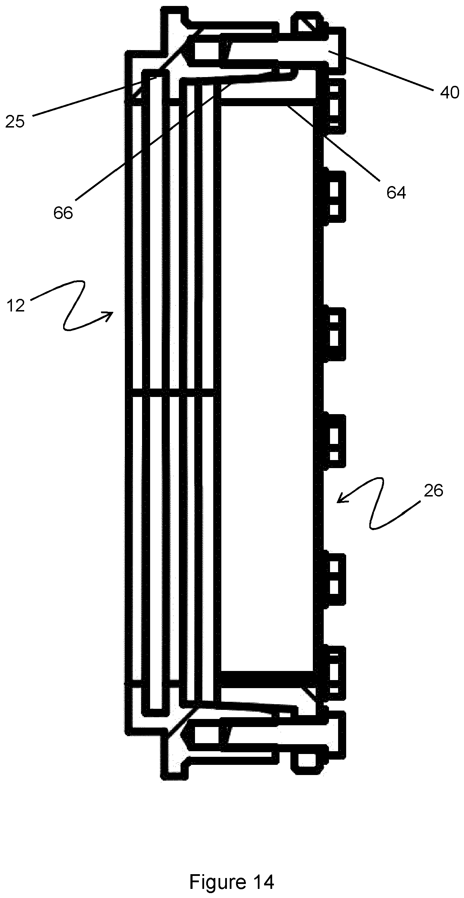

As best seen in figure 14, the inner surface 64 of the second member 26 is configured to engage the shaft 6. The inner surface 66 of the first member 12 is therefore configured to engage the outer surface 68 of the second member 26. This causes flexion of the second member 26 into engagement with the shaft 6. The inner surface 66 of the first member 12 and the outer surface 68 of the second member 26 are tapered/angled to bias the second member 26 into engagement with the shaft 6. The second member 26 is received within the first member 12. It can be appreciated that operation of the locking system 2 is substantially the same as previously described, however, a portion of the second member 26 flexes to engage shaft rather than a portion of the first member 12.

Flexion of the first member 26 to engage the shaft may be provide by flexion thereof (i.e. due to a relatively thin wall thickness). In other embodiments, the first member 26 may comprise tabs or the like. It can be appreciated that in either embodiments, the tabs 18 or the inner surface 66 of the first member 12 form a locking portion configured to be selectively biased into engagement with the shaft 6. In some embodiments, only one of the first and second member comprises an angular surface. However, it can be appreciated that providing angular surface on both the first and second member allows relative sliding of the first and second member, and reduces excessive stresses.

A recess 25 is provided to receive a gasket. The recess 25 is annular. The recess 25 may define a groove or the like to retain a gasket.

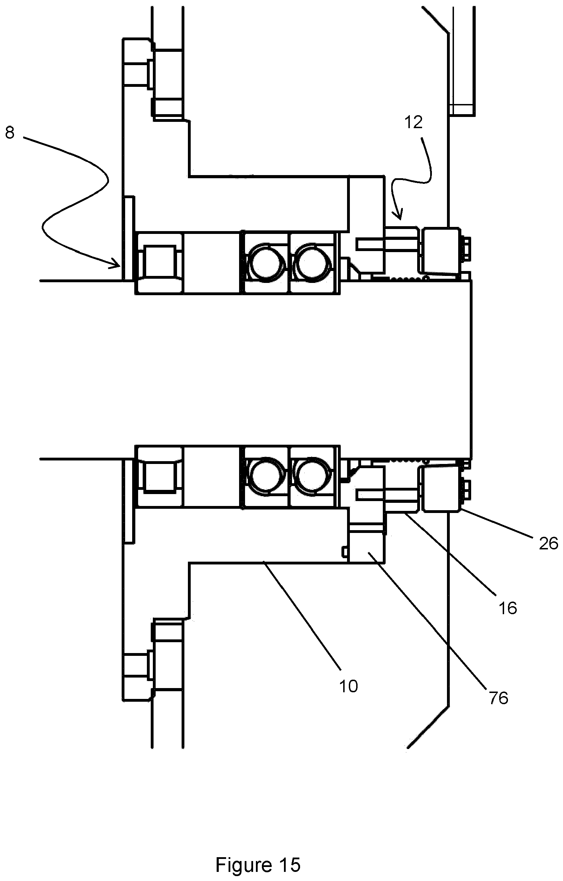

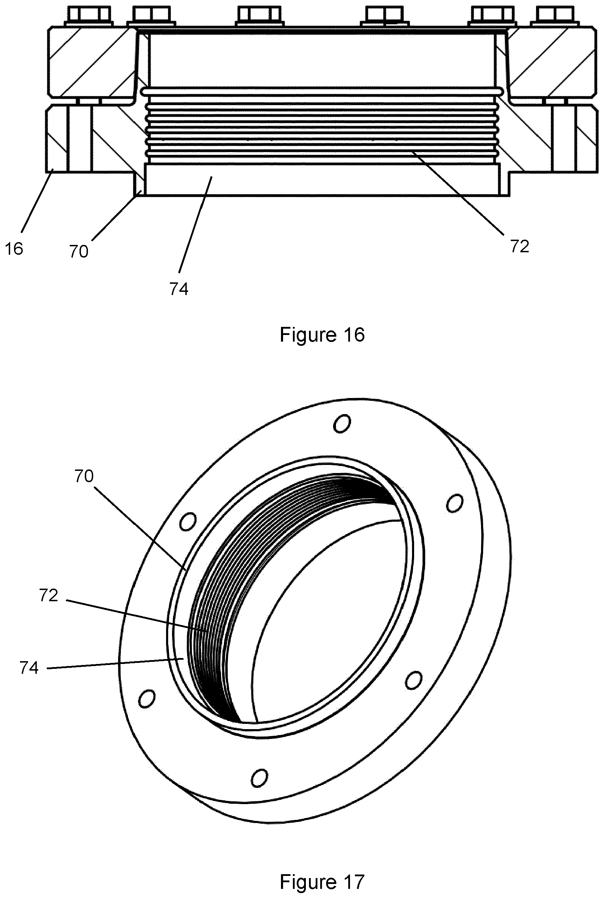

A further embodiment is shown in figures 15-17. In this embodiment, the bearing assembly 8 is lubricated using a lubricant. The first member 12, is configured to provide a seal/gasket arrangement for the bearing assembly 8 to retain the lubricant therein. The first member 12 comprises an upstanding flange 70 configured to be received and seal against the bearing assembly housing 10. The first member 12 comprises a plurality of grooves 72 on an inner surface 74. The grooves 72 are configured to retain a gasket (not shown) therein. The gasket provides a seal between the first member 6 and the shaft 6. The second member 26 may be the same as described in figures 1-7. The locking system 2 is mounted to an end plate 76. The end plate 76 forms an end wall of the bearing assembly 8.

In some embodiments, the grooves 72 themselves provide the sealing (i.e. the grooves 72 are sufficiently close the shaft 6 to prevent leakage of lubricant of sufficient viscosity). It can be appreciated that such an arrangement may be provided in any of the previous embodiments.

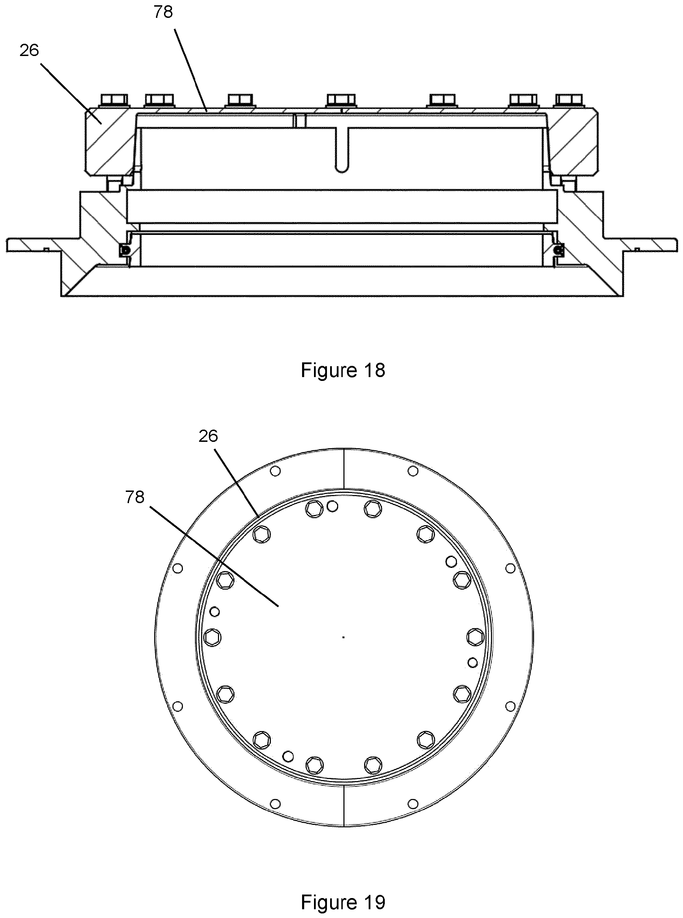

A further embodiment is shown in figures 18 and 19. The second member 26 comprises an end face 78. The end face 78 extends across the entire span of the second member 26. The second member 26 thus provides an end surface, shield, cover or cap for the shaft. The locking system 2 therefore enclose the shaft and/or the end thereof. The end face 78 may comprise attachment points. For example, a tachometer may be attached thereto.

It can be appreciated that second member 26 may comprises any suitable shape or form, provided that the shape (at least the inner surface thereof) is suitable for engaging the first member 26. The second member 26 and/or the end face 78 thereof may comprise a complex or polygonal shape. The second member 26 and/or the end face 78 may comprise fasteners, attachment points, brackets, mounts, rails or other systems to allow attachment of a further component. In some embodiments, the second member 26 may be affixed to a frame or end structure, which is provided over or around the first member 12.

### Operation of the invention

The first member 12 is assembled onto the bearing and around the shaft of the motor/rotor. In the embodiment in figures 1-7 and 15-17, this involves mounting the first member 12 to bearing housing 10. In the embodiments in figures 8-14, the sections 12A and 12B are placed on the shaft, secured together and then secured to the motor/rotor.

In the next step, the second member 26 is placed onto the first member 12. In the embodiment in figures 1-7 and 15-17, the second member 26 is placed onto the shaft, slid along the length thereof, and then secured to the first member. In the embodiments in figures 8-14, the sections 26A and 26B are fixed directly onto the first member 12. In the embodiment in figures 8 and 9, the sections 26A and 26B may be joined to one another before/after connection to the first member 12.

The first member 12 and second member 26 are connected via the fasteners 40, biasing/driving the tabs 18 or inner surface 64 (i.e. locking portion) into engagement with the shaft 6. The shaft 6 is then held in a fixed position (rotationally and/or translationally). The fasteners 40 can be tightened according to the desired clamping/locking force required for the shaft 6.

When rotation of the shaft 6 is required again, the fasteners 40 can be loosened, such that the locking portions no longer frictionally engage the shaft 6. The first member 12 and second member 26 may be left connected to one another in the unlocked state. The first member 12 and second member 26 may therefore remain mounted to the motor during operation. This allows the motor to be locked again at a later time without needing to retrieve the locking system from a separate location. The locking portion 18,64 is therefore configured such that little/no flexion thereof occurs when the first and second member are initially connected (i.e. there is some dead space or tolerance).

In the present embodiments, flexion of the first/second member is provided by the inherent flexibility of the material formed therefrom (i.e. the tabs and first/second member are unitary). Typically, the tolerances between the first/second member and the shaft are close, and so relatively little flexion is required. However, in the unlocked configuration, some space is provided to avoid the locking seal engaging the shaft. In other embodiments, the flexion may be provided by forming part of the first/second members from different materials and/or providing flexible joints/pivots. In some embodiments, the portion of the first/second members engaging the shaft 6 may comprise a frictional and/or protective material (e.g. rubber or polymer).

The system is designed such that when the system 2 is locked, little (i.e. within an acceptable tolerance) or no deformation of the sealing arrangement between the first and/or second member and the shaft 6 occurs. Typically, the sealing arrangement is axially offset from the tabs 18 etc. to ensure this is the case. The seal between first and/or second member is therefore also maintained in normal operation.

The locking system 2 is typically made from a lightweight material. In the present embodiment, the material comprises aluminium. For example, the locking system 2 may be less than or equal 10kg. Typically, the system 2 weighs 4-5kg.

The locking system may be used to secure and/or seal the shaft 6 of a motor, generator, turbine or other (electro)mechanical system comprising a rotor. However, it can be appreciated that the present system 2 may be used that comprises a rotatable shaft having some form of bearing assembly. For example, the system may be used in one or more: wheels or axles; braking systems; mills; pumps; trains; propulsion systems; crushers; fishing rods (telescopic); radio masts; antenna/radar towers etc.

In the present embodiment, the locking portion is configured to frictionally engage the shaft 6. In other embodiments, the shaft 6 may comprise locking features (for example, groove, detent or indents) in which the locking portion engages. Where the shaft is non-circular or polygonal, it can be appreciated that the first and/second member (or the apertures 14,18 thereof) are shaped accordingly.

In some embodiments, the second member 26 may be configured to seal against the shaft 6 (i.e. to retain lubricant). The second member 26 may comprise one or groove and/or gasket to provide said seal.

The present system allows selective locking or a motor and/or the shaft thereof. The system may be placed at any suitable place on the shaft, allowing a flexible configuration. The system does not require complicated/ad hoc locking mechanisms, and thus provides easy manufacture and transportation. The system further provides a simple means to provide a seal between the shaft and housing thereof. The locking system provides a dual purpose of locking and providing a seal for a bearing assembly. This reduces manufacturing and maintenance complexity. For example, the first member may be easily removed to provide access to the bearings, for example, to provide more lubricant thereto.

The system can remain on the motor during operation (e.g. in a loosened state), allowing convenient operation thereof. The lightweight aluminium construction allows the user to easily handle the system, in particular, without the use of heavy rigs. The fasteners may also be tightened using conventional, non-specialist tools.

## Claims

1. A locking mechanism (2) for a shaft comprising:
a first member (12) and a second member (26), the first and/or second member configured to receive a shaft (6) therein and provide a seal therebetween, and configured to be selectively affixed to one another via a fastening mechanism (40); and
where one of the first member (12) and second member (26) comprises a locking portion (18,64), the other of the first and second member is configured to engage said locking portion (18,64) and bias said locking portion (18,64) into engagement with the shaft (6) when the first and second member are affixed to one another.

2. A locking mechanism according to claim 1, where the locking portion (18,64) comprises one or more tabs (18) displaced about the circumference of the shaft (6) in use.

3. A locking mechanism according to claim 2, where the tab (18) comprises an undercut (22) or portion of reduced width to aid with movement thereof.

4. A locking mechanism according to any preceding claim, where the first member (12) and/or second member (26) comprises an angular or tapered surface (30,66), such that relative movement of the first member (12) and second member (26) in a first direction causes the locking portion (18,64) to move in an orthogonal direction.

5. A locking mechanism according to claim 4, where both the first member (12) and second member (26) comprise corresponding angular/tapered surface (18,30,66) to provide movement of the locking portion (18,64).

6. A locking mechanism according to any preceding claim, where the first member (12) and/or second member (26) comprises a plurality of discrete sections.

7. A locking mechanism according to claim 6, where at least two of the discrete sections are connected to one another via an interlocking formation (52,54).

8. A locking mechanism according to claim 6 or 7, where the first member (12) and/or second member (26) comprises a recess (56) therein to allow connection between at least two of the sections.

9. A locking mechanism according to any preceding claim, where the first member (12) and/or second member (26) comprises a gap (36) or discontinuity about a circumferential direction to allow flexion thereof.

10. A locking mechanism according to any preceding claim, where the first member (12) and/or second member (26) comprise an annular or ring shape.

11. A locking mechanism according to any preceding claim, where a portion (18,64) of one or first member and second member is received within the other of the first and second member.

12. A locking mechanism according to any preceding claim, where the inner surface (74) of the first member (12) and/or second member (26) comprises one or more groove (72) to receive a gasket.

13. A locking mechanism according to any preceding claim, where the first member (12) and/or second member (26) provide a housing or end plate for a bearing assembly (8).

14. A locking mechanism according to any preceding claim, where the first member (12) and second member (26) comprise respective apertures (17,38) or recesses such that a fastener (40) can extend between first and second member in use.

15. A turbine, motor or generator comprising the locking mechanism of any preceding claim.
